# EUROPÄISCHE PATENTANMELDUNG

(11) **EP 4 343 139 A1**
(43) Veröffentlichungstag der Anmeldung: **27.03.2024**
(21) Anmeldenummer: 23193222.9
(22) Anmeldetag: 24.08.2023
(51) Int. Cl.: F02M 31/04, F02M 31/13, F02M 35/10, H05B 3/10

(54) **EINSPRITZVORRICHTUNG UND ELEKTRISCHE HEIZVORRICHTUNG FÜR EINE ENTSPRECHENDE EINSPRITZVORRICHTUNG**

(30) Priorität: 26.09.2022 DE 102022124676
(71) Anmelder: Eberspächer catem GmbH & Co. KG, 76863 Herxheim (DE)
(72) Erfinder: Weber, Daniela, 76872 Winden (DE); Fischer, Waldemar, 76751 Jockgrim (DE); Weinand, Ralf Lothar, 76744 Wörth am Rhein (DE)
(74) Vertreter: Grünecker Patent- und Rechtsanwälte PartG mbB

(57) **Zusammenfassung**

Die vorliegende Erfindung betrifft das Gebiet der Konditionierung von Brennstoff in einem Verbrennungsmotor (2), der eine Spritzdüse (16) für einzuspritzenden Kraftstoff (22) aufweist, die mit einer Pumpe (18) zum Einspritzen des Kraftstoffs (22) und mit einer Frischluftzuführung (4) zu dem Verbrennungsmotor (2) verbunden ist. Zur Schaffung einer Einspritzvorrichtung, die eine Temperierung der eingespritzten Medien bei einfacher Bauweise und Anordnung in dem Kraftfahrzeug erlaubt, weist die Einspritzvorrichtung eine elektrische Heizvorrichtung (14) zur Erwärmung der zugeführten Frischluft auf, die fluidisch über ein erstes Schlauchstück (10) mit der Einlassseite der Frischluftzuführung (4) und über ein zweites Schlauchstück (12) mit dem Verbrennungsmotor (2) verbunden ist und die einen geschichteten Heizblock (54) umfassend zumindest eine wärmeabgebende Lage (56) und zumindest eine wärmeleitend damit gekoppelte wärmeerzeugende Lage mit zumindest einem PTC-Element (60) und beidseitig daran anliegenden Leiterelementen (62) hat.

## Beschreibung

Die vorliegende Erfindung betrifft das Gebiet der Konditionierung von Brennstoff in einem Verbrennungsmotor. Die vorliegende Erfindung betrifft insbesondere einen Motor mit Direkteinspritzung des in dem Motor verbrannten Kraftstoffs.

Einspritzvorrichtungen für die Direkteinspritzung in einen Verbrennungsmotor haben eine Einspritzdüse, die den Kraftstoff unmittelbar in den Brennraum oder in einen zugeführten Frischluftstrom in Strömungsrichtung unmittelbar vor dem Motor einspritzt. Die Frischluft wird über einen Schlauch zugeführt, in dem ein Luftmassenmesser und eine Drosselvorrichtung vorbaut sein können, die steuerungsmäßig mit einem Steuergerät zu der Einspritzvorrichtung verbunden sind, welche Steuervorrichtung auch eine Pumpe zum Einspritzen des Kraftstoffs und gegebenenfalls weitere Aggregate steuern bzw. Signale von weiteren Sensoren verarbeiten kann. So kann beispielsweise im Bereich des Motors ein Drucksensor vorgesehen sein, über den der Betriebsdruck des eingespritzten Kraftstoffs kurz vor dem Auslass der entsprechenden Einspritzdüse ermittelt wird.

Diese allgemein bekannten Merkmale gelten auch zumindest als bevorzugte Merkmale der erfindungsgemäßen Einspritzvorrichtung.

Abhängig von den Umgebungsbedingungen besteht der Wunsch, die dem Brennraum zugeführten Fluide, d. h. den Brennstoff und/oder die Luft zu erwärmen. Aus DE 10 2018 204 441 A1 ist eine Brennstoffheizeinrichtung als Teil einer Einspritzvorrichtung bekannt. Bei diesem Stand der Technik wird der Kraftstoff über eine PTC-Heizeinrichtung erwärmt, die sich zwischen der zentralen Kraftstoffzufuhr und der einzelnen Einspritzdüsen angeordnet ist, wobei jeder einzelnen Einspritzdüse eine entsprechende Kraftstoffheizeinrichtung zugeordnet ist.

Der vorliegenden Erfindung liegt das Problem zugrunde, eine Einspritzvorrichtung anzugeben, die eine Temperierung der eingespritzten Medien bei einfacher Bauweise und Anordnung in dem Kraftfahrzeug erlaubt.

Zur Lösung dieses Problems wird mit der vorliegenden Erfindung eine Einspritzvorrichtung mit den Merkmalen von Anspruch 1 vorgeschlagen.

Die erfindungsgemäße Einspritzvorrichtung hat eine elektrische Heizvorrichtung zur Erwärmung der zugeführten Frischluft, die innerhalb der Frischluftzuführung angeordnet ist und beidseitig zwischen Schlauchabschnitten der Frischluftzuführung vorgesehen ist. Dazu befindet sich die elektrische Heizvorrichtung zwischen einem ersten Schlauchstück, das einlassseitig vorgesehen ist und mit einer Einlassöffnung für die Zufuhr von Frischluft kommuniziert. Die elektrische Heizvorrichtung ist zwischen diesem ersten Schlauchstück und einem zweiten Schlauchstück vorgesehen, welches fluidisch mit dem Motor verbunden ist. Dadurch ist es möglich, die elektrische Heizvorrichtung leicht und vibrationsgeschützt und vor allem vor Abwärme des Motors beabstandet vorzusehen. Die elektrische Heizvorrichtung hat zur Wärmeerzeugung einen geschichteten Heizblock umfassend zumindest eine wärmeerzeugende Lage mit zumindest einem PTC-Element und beidseitig daran anliegenden Leiterelementen. Der geschichtete Aufbau hat zumindest eine wärmeabgebende Lage. Bei dieser wärmeabgebenden Lage handelt es sich üblicherweise um eine Wellrippenlage, die durch mäandrierendes Biegen eines gut wärmeleitenden Blechstreifens beispielsweise aus Aluminium oder Kupfer gebildet ist. Die wärmeerzeugende Lage ist üblicherweise zwischen zwei wärmeabgebenden Lagen vorgesehen. Eine solche Heizzelle mit zwei wärmeabgebenden Lagen und einer dazwischen vorgesehenen wärmeerzeugenden Lage stellt üblicherweise die kleinste Einheit der elektrischen Heizvorrichtung dar. Die elektrische Heizvorrichtung kann auch auf einen solchen Heizblock beschränkt sein.

Der Heizblock befindet sich üblicherweise in einem Gehäuse der elektrischen Heizvorrichtung. Der Heizblock ist bevorzugt mittels einer Feder hierin vorgespannt gehalten, sodass die unterschiedlichen Lagen des geschichteten Heizblocks unter Vorspannung gegeneinander angelegt werden, wodurch die Wärmeauskopplung verbessert und auch eine gute elektrische Leitung zwischen den Leiterelementen und dem zumindest einen PTC-Element gewährleistet wird. Eine gute elektrische Anbindung des PTC-Elementes ist geboten, nicht zuletzt da die elektrische Heizvorrichtung nach der vorliegenden Erfindung üblicherweise mit der Bordnetzspannung des Kraftfahrzeuges von zwölf Volt betrieben wird, was bei der gegebenen Leistungsaufnahme der elektrischen Heizvorrichtung von mehreren hundert Watt zu entsprechend hohen Strömen führen kann.

Im Hinblick auf eine einfache Fertigung der elektrischen Heizvorrichtung wird gemäß einer bevorzugten Weiterbildung der vorliegenden Erfindung vorgeschlagen, ein zweiteiliges Gehäuse vorzusehen, wobei jedes der Gehäuseteile in baulicher Einheit einen Schlauchanschlussstutzen für die jeweiligen Schlauchstücke und ein rahmenförmiges Gehäusesegment ausbildet, das den Heizblock zumindest teilweise umgibt. Dieses Gehäuse kann den Heizblock in Strömungsrichtung der zu erwärmenden Frischluft und/oder in Umfangsrichtung um den Heizblock herum vorgesehen sein. Die Umfangsrichtung erstreckt sich üblicherweise rechtwinklig zu der Strömungsrichtung des zu erwärmenden Frischluftstroms. Die Schlauchanschlussstutzen sind üblicherweise zueinander fluchtend vorgesehen. Der Heizblock erstreckt sich quer zu der durch die Anschlussstutzen vorgegebenen Durchtrittsrichtung der Frischluft. Mit anderen Worten sind die einzelnen Lagen des geschichteten Heizblocks in einer Ebene geschichtet, die sich quer zu der Längsachse der Schlauchanschlussstutzen erstreckt.

Gemäß einer bevorzugten Weiterbildung der vorliegenden Erfindung sind die Gehäuseteile aus Kunststoff gebildet und lassen sich dementsprechend kostengünstig als Massenbauteile herstellen. Die Gehäuseteile sind bevorzugt unter Einschluss des Heizblocks miteinander verrastet.

Zur Aufnahme des geschichteten Heizblocks bilden die Gehäuseteile bevorzugt Rahmensegmente aus. Jedes Rahmensegment umgibt den Heizblock umfänglich und bildet auch den Heizblock in Durchtrittsrichtung der Frischluft abstützende Anlageflächen aus. Die Anlageflächen der einzelnen Gehäuseteile sind dabei üblicherweise so relativ zueinander positioniert, dass der Heizblock fest und spielfrei zwischen den beiden Gehäuseteilen aufgenommen, bevorzugt geklemmt ist. Die zuvor bereits erwähnte Feder, die die einzelnen Lagen des geschichteten Aufbaus gegeneinander verspannt anlegt, kann auch hier dazu beitragen, dass der Heizblock vibrationsfest in dem Gehäuse aufgenommen ist, sodass von der elektrischen Heizvorrichtung keine Vibrationsgeräusche abgesetzt werden können, die in einem Fahrzeug mitunter als störend empfunden werden.

Zur Abstützung des geschichteten Heizblocks zwischen den beiden Gehäuseteilen wird gemäß einer bevorzugten Weiterbildung vorgeschlagen, zwischen dem zuvor erwähnten Rahmensegment und dem jeweiligen Schlauchanschlussstutzen des einzelnen Gehäuseteils zumindest einen Stützsteg zur Abstützung des Heizblocks in Durchtrittsrichtung der Frischluft vorzusehen. Im Hinblick auf einen möglichst ungehinderten Durchtritt der zu erwärmenden Frischluft durch den geschichteten Heizblock sollten die dem einen Gehäuseteil zugeordneten Stützstege in Längsrichtung der Schlauchanschlussstutzen mit einem korrespondierenden Stützsteg des anderen Gehäuseteils fluchten. Auch ist es zu bevorzugen, die wärmeerzeugende Lage zwischen einander gegenüberliegenden und sich parallel zu der wärmeerzeugenden Lage erstreckenden Stützstegen vorzusehen. Denn die wärmeerzeugende Lage als solches trägt nur unwesentlich zur Erwärmung der Frischluft bei. Die Erwärmung erfolgt insbesondere über die einzelnen Lamellen der wärmeabgebenden Lagen.

Gemäß einer weiteren bevorzugten Ausgestaltung, die eine kompakte elektrische Anbindung der elektrischen Heizvorrichtung an den Leistungsstrom und gegebenenfalls eine Steuerung zu dem Leistungsstrom ermöglicht, sind unterschiedlicher Polarität zugeordnete Leiterelemente durch Kontaktbleche gebildet, die seitlich über den Heizblock hinaus verlängert sind und die einteilig daran ausgebildete Kontaktzungen aufweisen. Diese Kontaktzungen sind bevorzugt in einem Steckergehäuse vorgesehen, das lediglich durch eines der Gehäuseteile gebildet wird. Das Fügen der beiden Gehäuseteile unter Einschluss des Heizblocks führt dementsprechend zwangsläufig auch zur Aufnahme der Kontaktzungen in dem Steckergehäuse. Die hier angesprochenen, unterschiedlicher Polarität zugeordneten Leiterelemente, die die Kontaktzungen ausbilden, müssen nicht notwendig diejenigen Leiterelemente sein, die unmittelbar gegen das zumindest eine PTC-Element anliegen und dieses bestromen. Die unterschiedlicher Polarität zugeordneten Leiterelemente liegen vielmehr auf gegenüberliegenden Seiten des PTC-Elementes innerhalb des geschichteten Heizblocks, wobei diese zwischen sich ein- oder beidseitig des PTC-Elementes auch zumindest eine wärmeerzeugende Lage aufnehmen können. Denn diese wärmeerzeugende Lage ist üblicherweise elektrisch leitend und aus einem Metall gebildet.

Für einen besonders kompakten elektrischen Anschluss wird gemäß einer bevorzugten Weiterbildung der vorliegenden Erfindung vorgeschlagen, dass die Kontaktzungen und das Steckergehäuse eine sich im Wesentlichen parallel zu den Anschlussstutzen erstreckende Stecckontaktierung vorgeben. Ein an das Steckergehäuse anzusteckender Gegenstecker wird dementsprechend parallel zu einem der Anschlussstutzen an das Steckergehäuse herangeführt und mit dem Steckergehäuse unter gleichzeitiger elektrischer Steckkontaktierung mit dem Steckergehäuse verbunden. Das Steckergehäuse hat bevorzugt eine Erstreckung in Längsrichtung des Anschlussstutzens, die kleiner als die entsprechende Erstreckung des Anschlussstutzens ist. Der das Steckergehäuse überragende vordere Abschnitt des Schlauchanschlussstutzens kann damit ohne Behinderung durch das Steckergehäuse an einen die Frischluft führenden Schlauch angeschlossen werden.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: Eine schematische Ansicht wesentlicher Komponenten einer Einspritzvorrichtung nach der vorliegenden Erfindung;
- Figur 2: eine perspektivische Explosionsdarstellung der elektrischen Heizvorrichtung der Einspritzvorrichtung nach Figur 1;
- Figur 3: eine perspektivische Seitenansicht der elektrischen Heizvorrichtung gemäß Figur 2;
- Figur 4: eine Längsschnittansicht der elektrischen Heizvorrichtung gemäß Figur 2 und 3 und
- Figur 5: eine Draufsicht auf die elektrische Heizvorrichtung nach den Figuren 2 bis 4.

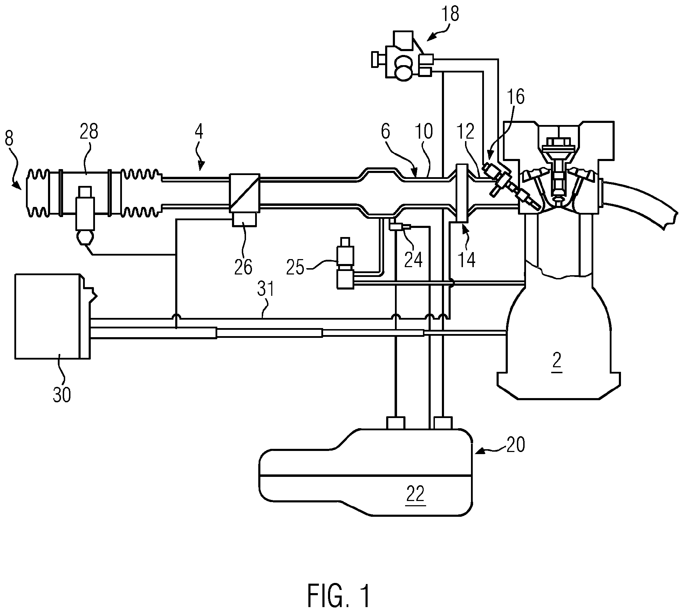

Die Figur 1 zeigt schematische Ansicht wesentliche Komponenten einer Einspritzvorrichtung mit einem Verbrennungsmotor 2, zu dem links von dem Verbrennungsmotor 2 die Lufteinlassseite und rechts die Abgasseite wiedergegeben ist, auf die nicht näher eingegangen wird.

Eine mit Bezugszeichen 4 gekennzeichnete Frischluftzuführung umfasst einen Schlauch 6, der jedenfalls benachbart zu dem Verbrennungsmotor 2 zweigeteilt ist und ein erstes, einer Einlassseite 8 zugeordnetes Schlauchstück 10 und ein zweites, mit dem Motor verbundenes Schlauchstück 12 aufweist. Zwischen diesen beiden Schlauchstücken 10, 12 befindet sich eine elektrische Heizvorrichtung 14.

Stromabwärts der elektrischen Heizvorrichtung 14 ist mit Bezugszeichen 16 eine Einspritzdüse gekennzeichnet, die mit einer Druckseite einer Pumpe 18 strömungstechnisch verbunden ist, wobei die Pumpe 18 einlassseitig mit einem Tank 20 für Kraftstoff 22 kommuniziert.

Stromaufwärts der elektrischen Heizvorrichtung 14 befindet sich in der Frischluftzuführung 4 ein Saugrohrdrucksensor 24 sowie ein benachbart dazu vorgesehener Abgang zu einem Abgasrückführventil 25 und eine Drosseleinrichtung 26 zum Drosseln der eingebrachten Frischluft. Stromabwärts der Drosseleinrichtung 26 ist ein Luftmassenmesser mit Temperatursensor 28 vorgesehen. Bezugszeichen 30 kennzeichnet ein elektronisches Steuergerät, welches mit den verschiedenen Komponenten der Einspritzvorrichtung datenmäßig verbunden ist und diese steuert bzw. deren Signale empfängt und zur Steuerung verarbeitet. In diesem elektronischen Steuergerät 30 kann auch eine Steuerung für die elektrische Heizvorrichtung 14 vorgesehen sein. Diese Fallgestaltung ist mit einem Kabel 31 verdeutlicht, welches einen 12-Volt-Leistungsstrom der elektrischen Heizvorrichtung 14 gesteuert von dem elektronischen Steuergerät 30 zuleitet.

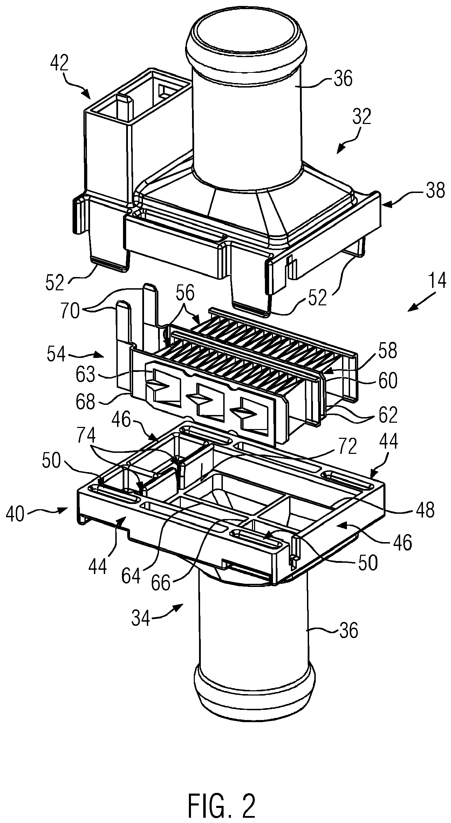

Details der elektrischen Heizvorrichtung 14 sind den Fig. 2 bis 5 zu entnehmen.

Wie insbesondere Fig. 2 verdeutlicht, hat die elektrische Heizvorrichtung 14 zwei Gehäuseteile, von denen ein erstes Gehäuseteil mit Bezugszeichen 32 und ein zweites Gehäuseteil mit Bezugszeichen 34 gekennzeichnet ist. Beide Gehäuseteile 32, 34 weisen jeweils Schlauchanschlussstutzen 36 und Rahmensegmente auf. Das Rahmensegment des ersten Gehäuseteils 32 ist mit Bezugszeichen 38 gekennzeichnet; das Rahmensegment des anderen Gehäuseteils 34 mit Bezugszeichen 40. Das erste Gehäuseteil 32 hat darüber hinaus ein mit Bezugszeichen 42 gekennzeichnetes Steckergehäuse. Die verschiedenen funktionalen Bereiche der entsprechenden Gehäuseteile 32 bzw. 34 sind jeweils einheitlich verwirklicht. Die Gehäuseteile 32, 34 sind jeweils Spritzgussteile aus Kunststoff.

Die Rahmensegmente 38, 40 haben jeweils Längsholme 44 und Querholme 46, die jeweils einen rechteckigen Aufnahmeraum 48 begrenzen. Die Längsholme 44 sind jeweils doppelwandig mit einem dazwischenliegenden Schlitz vorgesehen, der durch Stege unterbrochen wird. Hierdurch werden nicht nur die Längsholme 44 mechanisch versteift. Vielmehr werden jedenfalls von dem zweiten Gehäuseteil 34 hierdurch Rastaufnahmen 50 gebildet, in welche mit Bezugszeichen 52 gekennzeichnete Rastzungen des ersten Gehäuseteils 32 verriegeln können, um die beiden Gehäuseteile 32, 34 formschlüssig miteinander zu verbinden.

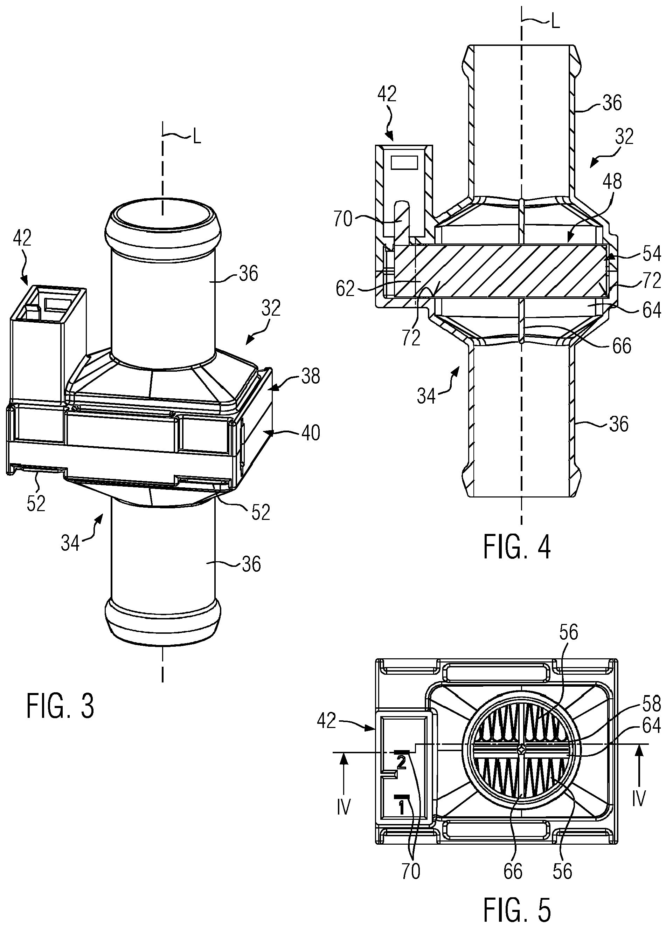

Wie insbesondere die Fig. 3 und 4 verdeutlichen, fluchten die Schlauchanschlussstutzen 36 im gefügten Zustand der Gehäuseteile 32, 34 und geben eine gemeinsame Längsachse L vor, die die Schlauchanschlussstutzen 36 jeweils mittig durchsetzt.

In Fig. 2 ist zwischen den beiden Gehäuseteilen 32, 34 ein mit Bezugszeichen 54 gekennzeichneter Heizblock dargestellt, der vorliegend zwei wärmeabgebende Lage 56 und eine dazwischen vorgesehene wärmeerzeugende Lage 58 umfasst. Diese wärmeerzeugende Lage 58 hat ein PTC-Element 60 und beidseitig dieses PTC-Element 60 kontaktierende Leiterelemente 62 vorliegend in Form von durch Stanzen und Biegen ausgeformten Kontaktblechen. Bezugszeichen 63 kennzeichnet eine Feder, die sich über die gesamte Länge der wärmeabgebenden Lage 56 bzw. der wärmeerzeugenden Lage 58 erstreckt. Diese Feder 63 stützt sich innen gegen die Längsholme 44 ab und ist in dem Aufnahmeraum 48 montiert, so wie der gesamte Heizblock 54. Wie insbesondere Fig. 4 verdeutlicht, wird die Aufnahme für den Heizblock 54 jeweils hälftig durch die Aufnahmeräume 48 geschaffen. Jeder der Aufnahmeräume 48 wird zwischen dem Heizblock 54 und dem Schlauchanschlussstutzen 36 des jeweiligen Gehäuseteils 32/34 durch sich rechtwinklig erstreckende Stützstege 64, 66 begrenzt. Der mit Bezugszeichen 64 gekennzeichnete Stützsteg erstreckt sich parallel zu der wärmeerzeugenden Lage 58. Diese wärmeerzeugende Lage 58 ist zwischen den Stützstegen 64 der beiden Gehäuseteile 32, 34 aufgenommen. Der andere Stützsteg 66 erstreckt sich rechtwinklig zu dem zuvor diskutierten Stützsteg 64 und durchsetzt die Aufnahme für den Heizblock 54 mittig, sodass sich die beiden Stützstege 64, 66 auf Höhe der Längsachse L schneiden; vgl. Fig. 5.

Der Heizblock 54 umfasst mehrere Kontaktbleche. Neben den beiden zuvor erwähnten Leiterelementen 62, die unmittelbar gegen das PTC-Element 60 anliegen, wird der Heizblock 54 insgesamt durch weitere Bleche begrenzt, von denen das in Fig. 2 gekennzeichnete vordere Blech ein Leiterelement 68 ausbildet, das wie das dazu auf der anderen Seite des PTC-Elementes 60 vorgesehene Leiterelement 62 eine Kontaktzunge 70 ausbildet. Die beiden Kontaktzungen 70 erstrecken sich parallel zu der Längsachse L und sind von dem Steckergehäuse 42 umgeben. So wird durch die Kontaktzungen 70 und das einseitig offene Steckergehäuse 42 eine Steckkontaktierung parallel zu der Längsachse L zur Kontaktierung des Kabels 31 mit der elektrischen Heizvorrichtung 14 vorgegeben.

Ersichtlich ist das Steckergehäuse 52 kürzer als der Schlauchanschlussstutzen 36 des ersten Gehäuseteils 32. Die beiden Schlauchanschlussstutzen 36 haben endseitig einen Wulst, über den jeweils die Schlauchstücke 10, 12 gezogen werden. Der entsprechende Wulst verhindert das Abgleiten des Schlauchstücks 10, 12 bzw. einer Schlauchklemme von dem jeweiligen Schlauchanschlussstutzen 36.

Die Fig. 2 und 4 verdeutlichen weitere und mit Bezugszeichen 72 gekennzeichnete Anlageflächen für den Heizblock 54. Diese Anlageflächen werden durch die Querholme 46 gebildet und stützen den Heizblock 54 an seinen gegenüberliegenden Enden ab. Der benachbart zu dem Steckergehäuse 42 vorgesehene Querholm 46 der beiden Gehäuseteile 32, 34 weist Längsschlitze 74, die die beiden Kontaktzungen 70 ausbildenden Leiterelemente 62, 68 in sich aufnehmen und in das Steckergehäuse 42 überführen. Das entsprechende Steckergehäuse ist unterseitig geschlossen.

### Bezugszeichenliste

- 2: Verbrennungsmotor
- 4: Frischluftzuführung
- 6: Schlauch
- 8: Einlassseite
- 10: erstes Schlauchstück
- 12: zweites Schlauchstück
- 14: elektrische Heizvorrichtung
- 16: Einspritzdüse
- 18: Pumpe
- 20: Tank
- 22: Kraftstoff
- 24: Saugrohrdrucksensor
- 25: Abgasrückführventil
- 26: Drosseleinrichtung
- 28: Luftmassenmesser mit Temperatursensor
- 30: Steuergerät
- 31: Kabel
- 32: erstes Gehäuseteil
- 34: zweites Gehäuseteil
- 36: Schlauchanschlussstutzen
- 38: Rahmensegment
- 40: Rahmensegment
- 42: Steckergehäuse
- 44: Längsholm
- 46: Querholm
- 48: Aufnahmeraum
- 50: Rastaufnahmen
- 52: Rastzunge
- 54: Heizblock
- 56: wärmeabgebende Lage
- 58: wärmeerzeugende Lage
- 60: PTC-Element
- 62: Leiterelement
- 63: Feder
- 64: Stützsteg
- 66: Stützsteg
- 68: Leiterelement
- 70: Kontaktzunge
- 72: Anlagefläche
- 74: Längsschlitz
- L: Längsachse

## Patentansprüche

1. Einspritzvorrichtung mit einem Verbrennungsmotor (2), der eine Spritzdüse (16) für einzuspritzenden Kraftstoff (22) aufweist, die mit einer Pumpe (18) zum Einspritzen des Kraftstoffs (22) verbunden ist und mit einer Frischluftzuführung (4) zu dem Verbrennungsmotor (2) **gekennzeichnet durch** eine elektrische Heizvorrichtung (14) zur Erwärmung der zugeführten Frischluft, die fluidisch über ein erstes Schlauchstück (10) mit der Einlassseite der Frischluftzuführung (4) und über ein zweites Schlauchstück (12) mit dem Verbrennungsmotor (2) verbunden ist und die einen geschichteten Heizblock (54) umfassend zumindest eine wärmeabgebende Lage (56) und zumindest eine wärmeleitend damit gekoppelte wärmeerzeugende Lage mit zumindest einem PTC-Element (60) und beidseitig daran anliegenden Leiterelementen (62).

2. Einspritzvorrichtung nach Anspruch 1, **dadurch gekennzeichnet, dass** die PTC-Heizvorrichtung (14) ein zweiteiliges Gehäuse aufweist, wobei jedes der Gehäuseteile (32, 34) in baulicher Einheit einen Schlauchanschlussstutzen (36) für die jeweiligen Schlauchstücke (10; 12) und ein Rahmensegment (38; 40), das den Heizblock (54) zumindest teilweise umgibt, ausbildet.

3. Einspritzvorrichtung nach Anspruch 2, **dadurch gekennzeichnet, dass** die Gehäuseteile (32, 34) aus Kunststoff gebildet und unter Einschluss des Heizblocks (54) miteinander verrastet sind.

4. Einspritzvorrichtung nach einem der Ansprüche 2 oder 3, **dadurch gekennzeichnet, dass** die Rahmensegmente (38, 40) den Heizblock (54) umfänglich umgeben und dass zwischen dem Rahmensegment (38, 40) und dem jeweiligen Schlauchanschlussstutzen (36) zumindest ein Stützsteg zur Abstützung des Heizblocks (54) in Durchtrittsrichtung der Luft vorgesehen ist.

5. Einspritzvorrichtung nach Anspruch 4, **dadurch gekennzeichnet, dass** die wärmeerzeugende Lage (58) zwischen einander gegenüberliegenden, sich parallel zu der wärmeerzeugenden Lage (58) erstreckenden Stützstegen (64) vorgesehen ist.

6. Einspritzvorrichtung nach einem der Ansprüche 2 bis 5, **dadurch gekennzeichnet, dass** die unterschiedlicher Polarität zugeordneten Leiterelemente (62; 68) durch Kontaktbleche gebildet sind, die seitlich über den Heizblock (54) hinaus verlängert sind und die einteilig daran ausgebildete Kontaktzungen (70) aufweisen.

7. Einspritzvorrichtung nach Anspruch 6, **dadurch gekennzeichnet, dass** die Kontaktzungen (70) in einem durch einen der Gehäusetele (32) gebildeten Steckergehäuse (42) vorgesehen sind.

8. Einspritzvorrichtung nach Anspruch 7, **dadurch gekennzeichnet, dass** die Kontaktzungen (70) und das Steckergehäuse (42) eine sich im Wesentlichen parallel zu den Schlauchanschlussstutzen (36) erstreckende Steckkontaktierung vorgeben.

9. Elektrische Heizvorrichtung (14) insbesondere zur Erwärmung von in einer Einspritzvorrichtung zugeführter Frischluft, die ein zweiteiliges Gehäuse aufweist, wobei jedes der Gehäuseteile (32, 34) in baulicher Einheit einen Schlauchanschlussstutzen (36) und ein Rahmensegment (38; 40), das einen Heizblock (54) zumindest teilweise umgibt, ausbildet, wobei der geschichtete Heizblock (54) zumindest eine wärmeabgebende Lage (56) und zumindest eine wärmeleitend damit gekoppelte wärmeerzeugende Lage mit zumindest einem PTC-Element (60) und beidseitig daran anliegenden Leiterelementen (62) aufweist.
